(19) Europäisches Patentamt
European Patent Office
Office européen des brevets

(11) **EP 3 496 199 A1**

(12) **EUROPEAN PATENT APPLICATION**
published in accordance with Art. 153(4) EPC

(43) Date of publication:
**12.06.2019 Bulletin 2019/24**

(21) Application number: **17837106.8**

(22) Date of filing: **04.08.2017**

(51) Int Cl.:
*H01M 8/18* *(2006.01)*    *H01M 4/86* *(2006.01)*
*H01M 4/96* *(2006.01)*    *H01M 8/02* *(2016.01)*
*H01M 8/0202* *(2016.01)*

(86) International application number:
**PCT/JP2017/028436**

(87) International publication number:
**WO 2018/026005 (08.02.2018 Gazette 2018/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.08.2016 JP 2016153696**

(71) Applicant: **Showa Denko K.K.
Tokyo 105-8518 (JP)**

(72) Inventors:
• **ICHIKAWA Masatoshi
  Tokyo 105-8518 (JP)**
• **ISEKI Keizo
  Tokyo 105-8518 (JP)**
• **HANAWA Kenzo
  Tokyo 105-8518 (JP)**

(74) Representative: **Strehl Schübel-Hopf & Partner
Maximilianstrasse 54
80538 München (DE)**

(54) **REDOX FLOW CELL**

(57)    The present invention provides a redox flow battery wherein a reduction of cell resistance is achieved. The redox flow battery includes: an ion-exchange membrane; a current collector plate; and an electrode that is disposed between the ion-exchange membrane and the current collector plate, wherein charging and discharging are performed by flowing of an electrolytic solution to the electrode. The electrode includes a first electrode part and a second electrode part in this order from the current collector plate side. The area of the second electrode part is larger than the area of the first electrode part and the second electrode part covers the whole of the first electrode part, when viewed from the ion-exchange membrane side. The current collector plate has a peripheral edge wall, which forms a housing region to which the first electrode part fits, on a surface of the electrode side. The second electrode part covers at least a part of a surface of the peripheral edge wall on the ion-exchange membrane side.

FIG. 4A

**Description**

BACKGROUND OF THE INVENTION

Field of the Invention

The present invention relates to a redox flow battery.
Priority is claimed on Japanese Patent Application No. 2016-153696, filed on August 4, 2016, the content of which is incorporated herein by reference.

Description of the Related Art

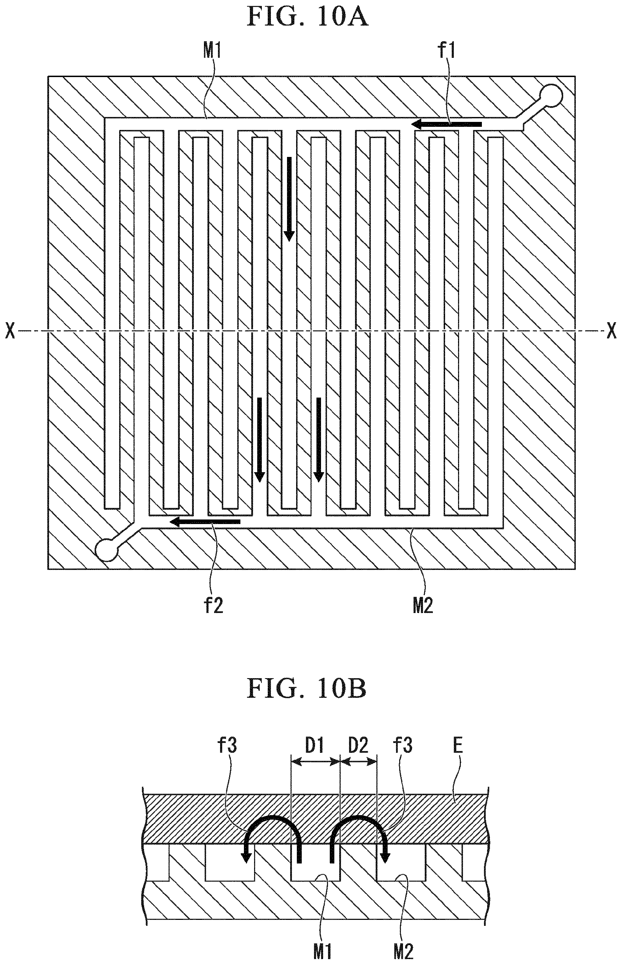

As a large-capacity storage battery, a redox flow battery is known. Typically, the redox flow battery includes an ion-exchange membrane configured to separate an electrolytic solution, and an electrode that is provided on both sides of the ion-exchange membrane. In the redox flow battery, an oxidation reaction and a reduction reaction are simultaneously performed in the electrodes, and thus charging and discharging are performed.
In the redox flow battery, a reduction of internal resistance (cell resistance) and a reduction of a pressure loss when the electrolytic solution permeates through the electrodes are required so as to enhance energy efficiency of the entirety of the redox flow battery.
For example, Patent Document 1 and Patent Document 2 achieve a reduction of a pressure loss by providing a groove that becomes a flow passage of an electrolytic solution in a current collector plate. Fig. 10A is a plan view which shows a groove provided in a redox flow battery described in Patent Document 1 and Patent Document 2. Fig. 10B is a cross-sectional view of a main portion that is cut along a plane X-X shown in Fig. 10A.
The redox flow battery shown in Fig. 10A includes a first comb-like groove M1 that communicates with an inflow port, and a second comb-like groove M2 that communicates with an outflow port. An electrolytic solution, which is supplied from the inflow port, flows and fills the first comb-like groove M1 (flow f1), and the electrolytic solution flows out to the second comb-like groove M2, flows along the second comb-like groove M2, and is discharged from the outflow port (flow f2). As shown in Fig. 10B, the electrolytic solution flows between the first comb-like groove M1 and the second comb-like groove M2 through an electrode E (flow f3).
The redox flow battery shown in Fig. 10A and Fig. 10B essentially cannot supply the electrolytic solution uniformly in a plane of the electrode E. Specifically, a first portion D1 immediately above the first comb-like groove M1, and a second portion D2 provided between the first comb-like groove M1 and the second comb-like groove M2 are different in a flow state of the electrolytic solution.

Citation List

Patent Document

Patent Document 1: Japanese Unexamined Patent Application, First Publication No. 2015-122231

Patent Document 2: Published Japanese Translation No. 2015-505147 of the PCT International Publication

SUMMARY OF THE INVENTION

The differences of a flow state of the electrolytic solution caused in a plane of the electrode causes an increase in cell resistance of a redox flow battery. The reason is that the entire surface of the electrode cannot be used to the maximum, when charging/ discharging is performed. Accordingly, a configuration of a redox flow battery is required wherein an electrolytic solution can be supplied uniformly in an in-plane direction of an electrode.
One aspect of the present invention has been made in consideration of the above-described problem, and an object of the present invention is to provide a redox flow battery which does not include a part in which an electrolytic solution does not flow uniformly, and cell resistance thereof is low.

Means for solving the problem

The present inventors found that, by locating an electrode at a predetermined position with respect to a current collector plate, it is possible to prevent the formation of a short-circuit passage at which a short circuit is caused by an electrolytic solution and to uniformize the flow of the electrolytic solution. Then, they found that cell resistance can be decreased by uniformizing the flow of the electrolytic solution.
Namely, one aspect of the present invention provides means described below to solve the above-described problem.

(1) A redox flow battery according to the first aspect is a redox flow battery which includes: an ion-exchange membrane; a current collector plate; and an electrode that is disposed between the ion-exchange membrane and the current collector plate, wherein charging and discharging are performed by flowing of an electrolytic solution to the electrode. The electrode includes a first electrode part and a second electrode part in this order from the current collector plate side. The area of the second electrode part is larger than the area of the first electrode part and the second electrode part covers the whole of the first electrode part, when viewed from the ion-exchange membrane side. The current collector plate has a peripheral edge wall, which forms a housing region to which the first electrode part fits, on a surface of the electrode side of the current collector plate. The second electrode part covers at least a part of a surface of the peripheral edge wall of the ion-exchange membrane side.

(2) In the redox flow battery according to the aforementioned aspect, the second electrode part may cover the whole of the surface of the peripheral edge wall of the ion-exchange membrane side.

(3) In the redox flow battery according to the aforementioned aspect, the first electrode part and the second electrode part may be constituted by different conductive sheets.

(4) In the redox flow battery according to the aforementioned aspect, transmittance of an electrolytic solution at the second electrode part may be smaller than transmittance of an electrolytic solution at the narrow part.

(5) In the redox flow battery according to the aforementioned aspect, the second electrode part may be a carbon nanotube sheet including carbon nanotubes having an average fiber diameter of 1 $\mu$m or less, and the first electrode part may be carbon paper or carbon felt including carbon fibers having an average fiber diameter of 1 $\mu$m or more.

(6) In the redox flow battery according to the aforementioned aspect, areas which are surrounded by the peripheral edge wall may be arranged in parallel.

(7) In the redox flow battery according to the aforementioned aspect, the electrode may have a conductive sheet on the ion-exchange membrane side of the second electrode part.

(8) In the redox flow battery according to the aforementioned aspect, the peripheral edge wall may include a first step part which supports the second electrode part and a second step part which supports the conductive sheet which is provided on the ion-exchange membrane side of the second electrode part.

Advantageous Effects of the Invention

Due to the redox flow battery according to the one aspect of the invention, it is possible to prevent the formation of a short-circuit passage which causes uneven flow of an electrolytic solution.

BRIEF DESCRIPTION OF THE DRAWINGS

Fig. 1 is a schematic cross-sectional view of a redox flow battery according to a first embodiment of the invention.
Fig. 2 is a plan view when a current collector plate accommodated in a cell frame of the redox flow battery according to the first embodiment is seen from a stacking direction.
Fig. 3A is a schematic cross-sectional view that is cut along a plane A-A in Fig. 2 of the current collector of the redox flow battery according to the first embodiment.
Fig. 3B is a schematic cross-sectional view that is cut along a plane B-B in Fig. 2 of the current collector of the redox flow battery according to the first embodiment.
Fig. 4A is a schematic cross-sectional view that is cut along a plane A-A in Fig. 2 of the redox flow battery according to the first embodiment.
Fig. 4B is a schematic cross-sectional view that is cut along a plane B-B in Fig. 2 of the redox flow battery according to the first embodiment.
Fig. 5A is a plan view when a flow of an electrolytic solution of the redox flow battery according to the first embodiment is seen from a stacking direction.
Fig. 5B is a cross-sectional view that is cut along a plane B-B in Fig. 5A.
Fig. 6 shows a main portion of the redox flow battery according to the first embodiment.
Fig. 7 shows a main portion of a redox flow battery, wherein the electrode neither has a wide part nor covers the top surface of a peripheral edge wall.
Fig. 8 shows a main portion of a redox flow battery, wherein an electrode covers the top surface of a peripheral edge wall, but the electrode neither has a narrow part nor fits to a recessed portion.
Fig. 9 is a schematic cross-sectional view of the redox flow battery according to the second embodiment.
Fig. 10A is a plan view of a groove that is provided in the redox flow battery described in Patent Document 1 and Patent Document 2.
Fig. 10B is a cross-sectional view of a main portion cut along a plane X-X in Fig. 10A.

DETAILED DESCRIPTION OF THE INVENTION

Hereinafter, a redox flow battery will be described in detail with reference to the accompanying drawings.

In the drawings used in the following description, for convenience, characteristic portions may be enlarged for easy understanding of the characteristics of the invention, and dimensions, ratios and the like of respective constituent elements may be different from actual dimensions. Materials, dimensions, and the like exemplified in the following description are illustrative only, and the present invention is not limited thereto and can be embodied in appropriately modified manners in a range that does not change the gist thereof.

First Embodiment

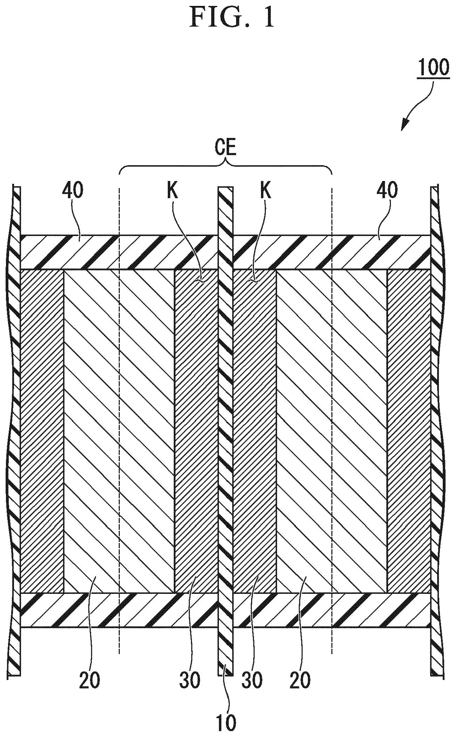

Fig. 1 is a schematic cross-sectional view of a redox flow battery 100 according to the first embodiment.

The redox flow battery 100 illustrated in Fig. 1 includes an ion-exchange membrane 10, a current collector plate 20, and an electrode 30. Outer peripheries of the current collector plate 20 and the electrode 30 are surrounded by a cell frame 40. The electrode 30 is provided in an electrode chamber K that is formed by the ion-exchange membrane 10, the current collector plate 20 and the cell frame 40. The cell frame 40 prevents an electrolytic solution supplied to the electrode chamber K from being leaked to the outside.

The redox flow battery 100 illustrated in Fig. 1 has a cell stack structure in which a plurality of cells CE are stacked. The number of the cells CE stacked may be appropriately changed according to usage, and a single cell is also possible. When the plurality of cells CE are connected in series, a voltage in practical use is obtained. Each of the cells CE includes the ion-exchange membrane 10, two electrodes 30 which function as a positive electrode and a negative electrode with which the ion-exchange membrane 10 is interposed therebetween, and current collector plates 20 with which the two electrodes 30 are interposed.

Hereinafter, a stacking direction of the cell stack structure in which the cells CE are stacked may be referred to as "stacking direction", and a plane direction perpendicular to the stacking direction of the cell stack structure may be referred to as "in-plane direction".

Ion-Exchange Membrane

As the ion-exchange membrane 10, a positive ion-exchange membrane can be used. Specific examples of materials of the positive ion-exchange membrane include a perfluorocarbon polymer having a sulfonic acid group, a hydrocarbon-based polymer compound having a sulfonic acid group, a polymer compound doped with an inorganic acid such as phosphorous acid, an organic/inorganic hybrid polymer of which a part is substituted with a proton-conductive functional group, and a proton conductor in which a polymer matrix is impregnated with a phosphoric acid solution or a sulfuric acid solution. Among these, the perfluorocarbon polymer having a sulfonic acid group is preferable, and Napion (registered trademark) is more preferable.

Current Collector Plate

The current collector plate 20 is a current collector that plays a role of delivering and receiving an electron to and from the electrode 30. The current collector plate 20 may be referred to as a "bipolar plate".

For example, a conductive material containing carbon can be used for the current collector plate 20 as a material having conductivity. Specific examples of the conductive material include a conductive resin including graphite and an organic polymer compound, a conductive resin in which a part of graphite is substituted with at least one of carbon black and diamond-like carbon, and a shaped material obtained through kneading of carbon and a resin and shaping the kneaded material. Among these, it is preferable to use the shaped material obtained through kneading of carbon and a resin and shaping the kneaded material.

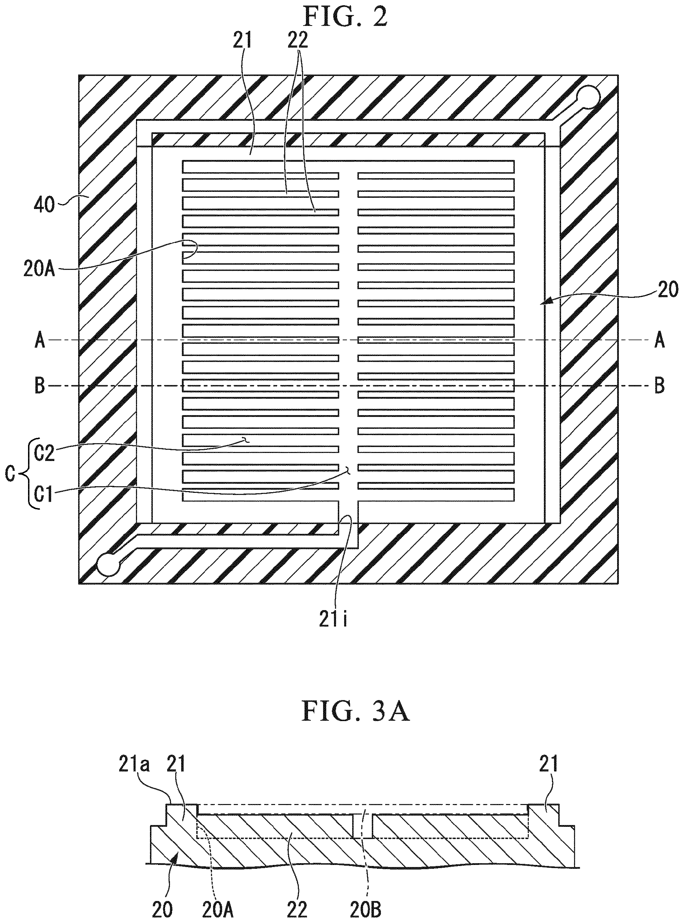

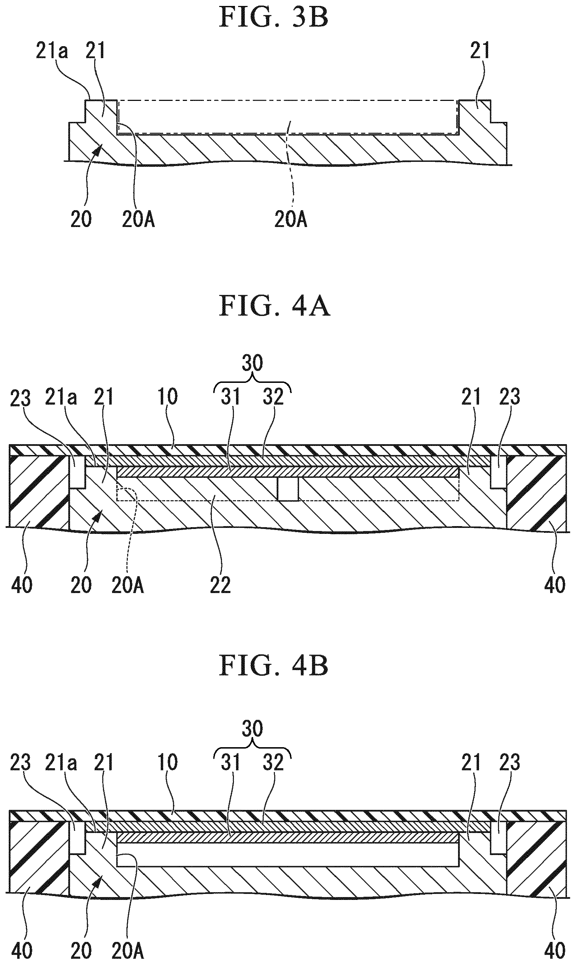

Fig. 2 is a plan view when the current collector plate 20 accommodated in the cell frame 40 is seen from the stacking direction. In addition, Fig. 3A is a cross-sectional view that is cut along a plane A-A in Fig. 2 of the current collector plate 20 accommodated in the cell frame 40. Fig. 3B is a cross-sectional view that is cut along a plane B-B in Fig. 2 of the current collector plate 20 accommodated in the cell frame 40.

A peripheral edge wall 21 which surrounds a recessed portion 20A is provided on a surface of the current collector plate 20 on the ion-exchange membrane 10 side. An electrolytic solution is supplied into the recessed portion 20A, which is surrounded by the peripheral edge wall 21, from an opening 21i of the peripheral edge wall 21. In the recessed portion 20A, an area to which a part of the electrode 30 is accommodated is an accommodation area 20B. The accommodation area 20B is formed by the peripheral edge wall 21 and an inner wall 22 in Fig. 3A and Fig. 3B.

The inner wall 22 is provided in the recessed portion 20A surrounded by the peripheral edge wall 21. The inner wall 22 forms a first flow passage C in which an electrolytic solution flows at an inflow part. The flow passage C formed by the inner wall 22 is not limited.

The inner wall 22 shown in Fig. 2 has a first flow passage C1 in which the flow passage C extends from the opening 21i in one direction, and a second flow passage C2 that is connected to the first flow passage C1 and is branched from the first flow passage C1 in an intersecting direction. In the configuration, the electrolytic solution that is supplied flows along the first flow passage C1, and flows to be diffused to the second flow passage C2. That is, the electrolytic solution is easily diffused in an in-plane direction of the recessed portion 20A.

Here, the configuration of the current collector plate 20 is not limited to the configuration shown in Fig. 2 and may have various configurations.

Electrode

Fig. 4A is a schematic cross-sectional view that is cut along a plane A-A in Fig. 2 of the redox flow battery 100 according to the first embodiment. Fig. 4B is a schematic cross-sectional view that is cut along a plane B-B in Fig. 2 of the redox flow battery 100 according to the first embodiment.

The electrode 30 includes a first electrode part 31 and a second electrode part 32 in this order from the current collector plate 20 side. The second electrode part 32 covers the whole of the first electrode part 31 when viewed from the ion-exchange membrane 10 side. The area of the second electrode part 32 is larger than the area of the first electrode part 31. Hereinafter, the first electrode part 31 may be described as a narrow part, and the second electrode part 32 may be described as a wide part.

In Fig. 4A and Fig. 4B, the narrow part 31 is a part which fits into a housing region 20B of the current collector plate 20, and is located on the current collector plate 20 side from the top surface 21a of the peripheral edge wall 21. The wide part 32 is a part of the electrode 30 not including the narrow part 31, and is located on the ion-exchange membrane 10 side from the top surface 21a of the peripheral edge wall 21.

The narrow part 31 and the wide part 32 may be integrated with each other, or may be formed as a laminate in which different conductive sheets are laminated.

The wide part 32 is located on the top surface 21a of the peripheral edge wall 21. The wide part 32 may cover at least a part of the top surface 21a, and it is preferable that the wide part 32 cover the whole of the top surface 21a. When the wide part 32 covers the top surface 21a, it is possible to prevent the formation of a short-circuit passage regarding the flow of an electrolytic solution described below.

As the electrode 30, a conductive sheet including carbon fibers can be used. The carbon fibers stated here are fiber-shaped carbon, and examples thereof include carbon fiber, carbon nanotubes and the like. When the electrode 30 includes the carbon fibers, a contact area between the electrolytic solution and the electrode 30 increases, and thus reactivity of the redox flow battery 100 is enhanced. Particularly, when the electrode 30 includes carbon nanotubes having a diameter of 1 $\mu$m or less, it is possible to enlarge the contact area of the electrolytic solution, and thus such a structure is preferable. Such an effect is obtained because of the small fiber diameter of the carbon nanotube. When the electrode 30 includes carbon fibers having a diameter of 1 $\mu$m or greater, the conductive sheet is strong and is less likely to be fractured, and thus such a structure is preferable. As the conductive sheet including the carbon fibers, for example, carbon felt, carbon paper, a carbon nanotube sheet and the like can be used.

It is preferable that the liquid permeability of the narrow part 31 be higher than that of the wide part 32. When the liquid permeability of the narrow part 31 is higher than that of the wide part 32, an electrolytic solution that has entered in the electrode chamber K is blocked by the wide part 32, and is diffused in an in-plane direction. When the electrolytic solution is diffused in an in-plane direction of the entire surface of the recessed portion 20A, it is possible to perform a charging/discharging reaction using the entire surface of the electrode 30, the cell resistance decreases, and charging /discharging capacity increases.

Here, the liquid permeability can be evaluated by Darcy's law of permeability (hereinafter, may be simply referred to as "permeability"). Darcy's law is generally used to indicate permeability of a porous medium, but is also applied to members other than the porous material in the invention for convenience. At this time, with respect to a non-uniform and anisotropic member, permeability in a direction in which the lowest permeability is obtained is employed.

Darcy's permeability k (m2) is calculated from a relationship of a liquid permeation flux (m/sec) expressed by the following expression, using a cross-sectional area S (m2) of a member through which a liquid having viscosity $\mu$ (Pa·sec) permeates, a length L (m) of the member, and a differential pressure $\Delta$P (Pa) between a liquid inflow side and a liquid outflow side of the member when a liquid passes therethrough in a flow rate of Q (m3/sec).

$$\frac{Q}{S} = \frac{k}{\mu} \times \frac{\Delta P}{L} \quad \cdots (1)$$

The liquid permeability in the narrow part 31 is preferably 100 or more times the permeability of the wider part 32, more preferably 300 or more times, and still more preferably 1000 or more times. Concrete Examples which can achieve such a relationship include a case wherein carbon paper, carbon felt or the like, which is formed by carbon fibers or the like having an average fiber diameter of 1 $\mu$m or more, is used as the narrow part 31, and a carbon nanotube sheet or the like including carbon nanotubes or the like having an average fiber diameter of 1 $\mu$m or less is used as the wide part 32. The permeability in the narrow part 31 represents permeability in an in-plane direction. The permeability in the wide part 32 represents permeability in a stacking direction (a normal direction perpendicular to the in-plane direction).

Operation of a redox flow battery

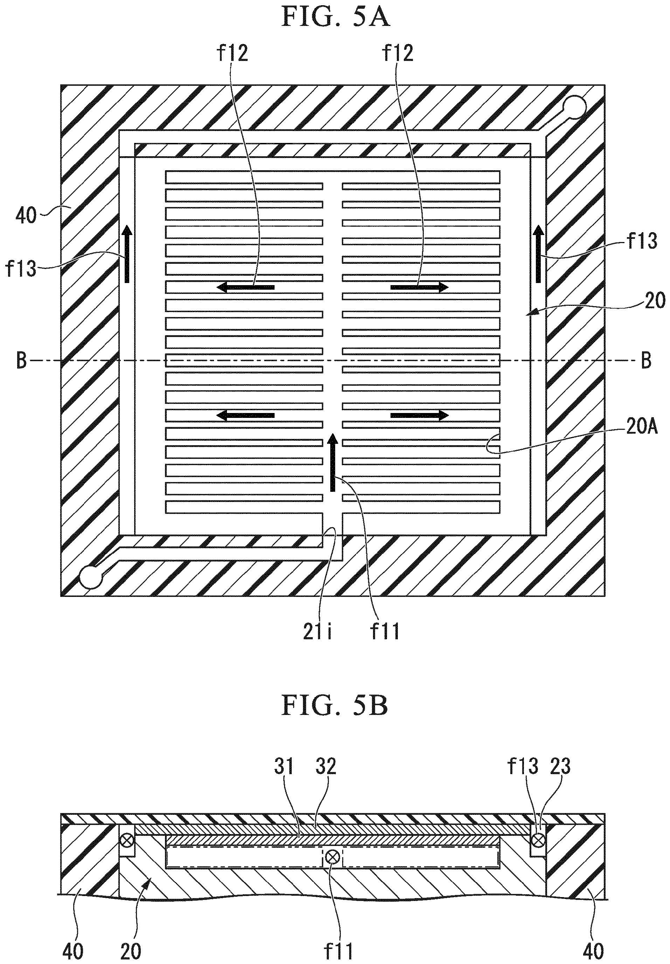

Using Fig. 5A and Fig. 5B, an example of operation of the redox flow battery 100 is explained. Fig. 5A is a plan view when a flow of an electrolytic solution of the redox flow battery 100 according to the first embodiment is seen from a stacking direction. Fig. 5B is a cross-sectional view that is cut along a plane B-B in Fig. 5A. The inner wall 22 is indicated in Fig. 5B by dotted lines for easy understanding.

In the electrode chamber K of the redox flow battery 100, an electrolytic solution is supplied from an inflow port provided at the cell frame 40. The electrolytic solution which is supplied to the electrode chamber K reacts with the electrode 30 in the electrode chamber K. Ions which are generated by the reaction circulate between the electrodes 30 via the ion-exchange membrane 10, and thus charging and discharging are performed. The electrolytic solution after the reaction is discharged from an outflow port provided at cell frame 40.

In the electrode chamber K, the electrolytic solution is supplied into the recessed portion 20A from an opening 21i of the peripheral edge wall 21 (flow f11). The supplied electrolytic solution flows along the inner wall 22 and is diffused in an in-plane direction of the recessed portion 20A (flow f12). Then, the solution is discharged from a discharge passage 23 through the electrode 30 (flow f13).

Hereinafter, a flow of an electrolytic solution from the recessed portion 20A to the discharge passage 23 is concretely explained.

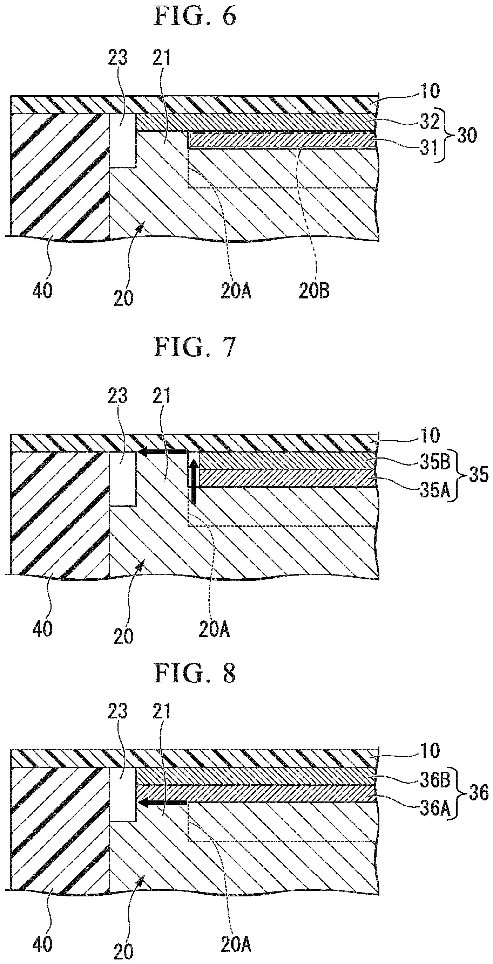

Fig. 6 shows a main portion of the redox flow battery 100 according to the embodiment. As shown in Fig. 6, the narrow part 31 fits into a housing region 20B of the recessed portion 20A. Accordingly, the electrolytic solution which is supplied to the electrode chamber K cannot arrive at the discharge passage 23 without passing in the electrode 30.

Here, it is considered that a short-circuit passage may be formed such that, after the electrolytic solution passes through the interface of the narrow part 31 and the peripheral edge wall 21, the electrolytic solution does not pass through the inside of the electrode 30 but passes through the interface of the wide part 32 and the top surface of the peripheral edge wall 21. However, since a pressure is applied in a stacking direction of the cell, and a gap between the peripheral edge wall 21 and the electrode 30 is small, such a short-circuit passage is less likely to be formed at the position. Furthermore, a flow direction of the electrolytic solution which passes through the interface of the narrow part 31 and the peripheral edge wall 21 intersects a flow direction of the electrolytic solution which passes through the interface of the top surface of the peripheral edge wall 21 and the wide part 32, and therefore such a short-circuit passage is hardly generated.

On the other hand, Fig. 7 shows a flow of an electrolytic solution at a main portion of a redox flow battery, wherein an electrode 35 neither has a wide part nor covers the top surface of a peripheral edge wall 21. The electrode 35 in Fig. 7 is shown as a double-layered electrode so that it corresponds to Fig. 6. That is, the double-layered electrode 35 includes a first electrode layer 35A and a second electrode layer 35B in this order from the current collector plate 20 side.

As shown in Fig. 7, when the electrode 35 does not cover the top surface of the peripheral edge wall 21, an electrolytic solution arrives at a discharge passage 23 through the interface of a recessed portion 20A and the electrode 35. The flow passage does not flow in the electrode 35, and is a short-circuit passage which does not contribute to the reaction.

Liquid distribution resistance of the short-circuit passage is lower than that of the flow passage which arrives at the discharge passage 23 through the electrode 35. Accordingly, a large amount of the electrolytic solution flows to the discharge passage 23 via the short-circuit passage. When a large amount of the electrolytic solution flows in the short-circuit passage, the flow of the electrolytic solution becomes uneven, and the electrolytic solution is not diffused uniformly all over the plane. Thus, the whole surface of the electrode cannot contribute to a reaction, and cell resistance increases.

Furthermore, Fig. 8 shows a flow of an electrolytic solution at a main portion of a redox flow battery, wherein an electrode 36 covers the top surface of a peripheral edge wall 21, but the electrode neither has a narrow part 31 nor fits into a recessed portion 20A. An electrode 36 in Fig. 8 is also shown as a double-layered electrode in order to correspond to Fig. 6. That is, the double-layered electrode 36 includes a first electrode layer 36A and a second electrode layer 36B in this order from the current collector plate 20 side.

In the redox flow battery shown in Fig. 8, the electrode 36 does not fit into the recessed portion 20A. Accordingly, a short-circuit passage is generated wherein an electrolytic solution passes through the interface of the electrode 36 and the peripheral edge wall 21. A gap between the peripheral edge wall 21 and the electrode 36 is small since pressure is applied in a stacking direction of the cell. However, it cannot be said that there is no gap for the electrolytic solution as a fluid. In addition, the electrolytic solution flows in one direction unlike the case shown in Fig. 6, and the flow of the electrolytic solution is hardly blocked.

In addition, in the redox flow battery shown in Fig. 8, when the liquid permeability of the first electrode layer 36A provided on the current collector plate 20 side is higher than the liquid permeability of the second electrode layer 36B provided on the ion-exchange membrane 10 side, most of the electrolytic solution passes through the first electrode layer 36A. That is, the second electrode layer 36B cannot contribute to the reaction, and cell resistance increases.

As described above, due to the redox flow battery 100 according to the first aspect, it is possible to avoid the formation of a short circuit at which the electrolytic solution does not pass through. Accordingly, in the redox flow battery 100 according to the first embodiment, the electrolytic solution can be supplied uniformly in an in-plane direction, and cell resistance decreases.

Second Embodiment

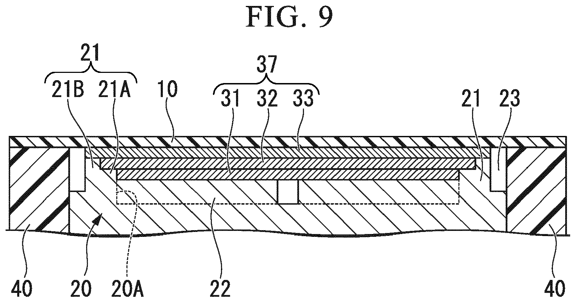

Fig. 9 is a schematic enlarged view wherein a main portion of the redox flow battery according to the second embodiment is enlarged. The redox flow battery according to the second embodiment is different from the redox flow battery 100 according to the first embodiment in that an electrode 30 has a triple-layered structure and a peripheral edge wall 21 has a two-step structure. Other configurations are the same as those in the first embodiment, and the same reference signs are used for the same configurations. Furthermore, Fig. 9 merely shows a configuration of one side wherein one electrode 37 is provided which interposes an ion-exchange membrane 10. A similar configuration is also provided at the other side of the ion-exchange membrane 10.

The electrode 37 of the redox flow battery shown in Fig. 9 also has a conductive sheet 33 at the ion-exchange membrane 10 side of a wide part 32.

The liquid permeability of the conductive sheet 33 is preferably 100 or more times the permeability of a wide part 32, more preferably 300 or more times, and still more preferably 1000 or more times. Concrete Examples which can achieve such a relationship include a case wherein a carbon sheet or the like including carbon nanotubes or the like having an average fiber diameter of 1 $\mu$m or less is used as the wide part 32, and carbon paper, carbon felt or the like, which is formed by carbon fibers or the like having an average fiber diameter of 1 $\mu$m or more, is used as the conductive sheet 33. The liquid permeability of the conductive sheet 33 represents permeability in an in-plane direction. On the other hand, the liquid permeability of the wide part 32 represents permeability in a stacking direction (a normal direction perpendicular to the in-plane direction).

In a case where the liquid permeability of the conductive sheet 33 is sufficiently higher than the liquid permeability of the wide part 32, the electrolytic solution that passes through the wide part 32 does not stay in the conductive sheet 33, and rapidly flows to the outflow port side. The electrolytic solution not staying in the conductive sheet 33 refers to a pressure necessary for the electrolytic solution to pass through the conductive sheet 33 being sufficiently lower than a pressure necessary for the electrolytic solution to pass through the wide part 32.

That is, since the electrolytic solution can be discharged efficiently from the inside of the conductive sheet 33, it is possible to prevent a flow of the electrolytic solution, which flows in the wide part 32 in a vertical direction (stacking direction), from being disturbed.

Furthermore, in the redox flow battery shown in Fig. 9, the peripheral edge wall 21 includes a first step part 21A and a second step part 21B. The first step part 21A supports the wide part 32. The second step part 21B supports the conductive sheet 33.

Accordingly, when viewed from the ion-exchange membrane 10 side, the interface of the narrow part 31 and the first step part 21A is blocked by the wide part 32, and the interface of the wide part 32 and the second step part 21B is blocked by the conductive sheet 33. In a case that the electrolytic solution flows along the surface of the first step part 21A and the second step part 21B, it is necessary for the electrolytic solution to flow while changing the flowing direction of the electrolytic solution.

As described above, the redox flow battery according to the second embodiment prevents the formation of a short-circuit passage due to the first step part 21A and the second step part 21B. As a result, the electrolytic solution is supplied uniformly all over the plane, and the cell resistance of the redox flow battery can decrease.

The redox flow battery according to the first embodiment and the redox flow battery according to the second embodiment can be suitably used according to use, material used thereof and the like. The redox flow battery according to the first embodiment is superior to the redox flow battery according to the second embodiment from the viewpoint of ease of processing.

While preferred embodiments of the invention have been described above, it should be understood that the present invention is not limited to the specific embodiments, and may be changed and modified within the scope of the summary of the present invention which is described in the appended claims.

EXPLANATION OF REFERENCES

| | |
|---|---|
| 10 | Ion-exchange membrane |
| 20 | Current collector plate |
| 20A | Recessed portion |
| 20B | Accommodation area |
| 21 | Peripheral edge wall |
| 21a | Top surface |
| 21A | First step part |
| 21B | Second step part |
| 22 | Inner wall |
| 23 | Discharge passage |
| 30, 35, 36, 37 | Electrode |
| 35A, 36A | First electrode layer |
| 35B, 36B | Second electrode layer |
| 31 | First electrode part (narrow part) |
| 32 | Second electrode part (wide part) |
| 33 | Conductive sheet |
| 40 | Cell frame |
| 100 | Redox flow battery |
| CE | Cells |
| K | Electrode chamber |
| C | Flow passage |
| C1 | First flow passage |
| C2 | Second flow passage |
| E | Electrode |

**Claims**

1. A redox flow battery, comprising:

   an ion-exchange membrane;
   a current collector plate; and
   an electrode that is disposed between the ion-exchange membrane and the current collector plate, wherein
   charging and discharging are performed by flowing of an electrolytic solution to the electrode,
   the electrode includes a first electrode part and a second electrode part in this order from the current collector plate side,

an area of the second electrode part is larger than an area of the first electrode part and the second electrode part covers the whole of the first electrode part when viewed from the ion-exchange membrane side,
the current collector plate has a peripheral edge wall, which forms a housing region to which the first electrode part fits, on a surface of the electrode side of the current collector plate, and
the second electrode part covers at least a part of a surface of the peripheral edge wall on the ion-exchange membrane side.

2. The redox flow battery according to Claim 1, wherein the second electrode part covers the whole of the surface of the peripheral edge wall on the ion-exchange membrane side.

3. The redox flow battery according to Claim 1 or 2, wherein the first electrode part and the second electrode part are constituted by different conductive sheets.

4. The redox flow battery according to any one of Claims 1 to 3, wherein transmittance of an electrolytic solution at the second electrode part is smaller than transmittance of an electrolytic solution at the first electrode part.

5. The redox flow battery according to any one of Claims 1 to 4, wherein the second electrode part is a carbon nanotube sheet including carbon nanotubes having an average fiber diameter of 1 $\mu$m or less, and the first electrode part is carbon paper or carbon felt including carbon fibers having an average fiber diameter of 1 $\mu$m or more.

6. The redox flow battery according to any one of Claims 1 to 5, wherein areas which are surrounded by the peripheral edge wall are arranged in parallel.

7. The redox flow battery according to any one of Claims 1 to 6, wherein the electrode has a conductive sheet on the ion-exchange membrane side of the second electrode part.

8. The redox flow battery according to Claim 7, wherein the peripheral edge wall includes a first step part which supports the second electrode part and a second step part which supports the conductive sheet which is provided on the ion-exchange membrane side of the second electrode part.

FIG. 1

## FIG. 2

## FIG. 3A

## FIG. 3B

## FIG. 4A

## FIG. 4B

# FIG. 5A

# FIG. 5B

FIG. 6

FIG. 7

FIG. 8

# FIG. 9

# FIG. 10A

M1           f1

X ———               X

f2        M2

# FIG. 10B

f3   D1 D2 f3 E

M1  M2

## INTERNATIONAL SEARCH REPORT

| International application No. |
|---|
| PCT/JP2017/028436 |

**A. CLASSIFICATION OF SUBJECT MATTER**
*H01M8/18*(2006.01)i, *H01M4/86*(2006.01)i, *H01M4/96*(2006.01)i, *H01M8/02* (2016.01)i, *H01M8/0202*(2016.01)i

According to International Patent Classification (IPC) or to both national classification and IPC

**B. FIELDS SEARCHED**

Minimum documentation searched (classification system followed by classification symbols)
H01M8/18, H01M4/86, H01M4/96, H01M8/02, H01M8/0202

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | DE 102014104601 A1 (SCHMID ENERGY SYSTEMS GMBH), 01 October 2015 (01.10.2015), (Family: none) | 1-8 |
| A | EP 2963723 A1 (ELESTOR BV), 06 January 2016 (06.01.2016), & US 2017/0133701 A1 & WO 2016/001392 A1 | 1-8 |
| A | WO 2016/104613 A1 (Showa Denko Kabushiki Kaisha), 30 June 2016 (30.06.2016), (Family: none) | 5 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 September 2017 (04.09.17) | 12 September 2017 (12.09.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/028436 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-188116 A  (Sumitomo Electric Industries, Ltd.), 04 July 2000 (04.07.2000), (Family: none) | 6 |
| A | CN 102751525 A  (Dongfang Electric Corp.), 24 October 2012 (24.10.2012), (Family: none) | 6 |

Form PCT/ISA/210 (continuation of second sheet) (January 2015)

**REFERENCES CITED IN THE DESCRIPTION**

**Patent documents cited in the description**

- JP 2016153696 A
- JP 2015122231 A
- JP 2015505147 PCT